# EUROPEAN PATENT SPECIFICATION

(11) **EP 0 715 804 B1**
(45) Date of publication and mention of the grant of the patent: **07.11.2001**
(21) Application number: 95203342.1
(22) Date of filing: 05.12.1995
(51) Int. Cl.: A01D 78/00, A01D 84/00, A01D 89/00, A01F 15/10

(54) **A machine for processing crop lying on the soil**
Maschine um auf den Boden liegendes Erntegut zu bearbeiten
Machine pour traiter une récolte disposée sur le sol

(30) Priority: 08.12.1994 NL 9402063
(43) Date of publication of application: 12.06.1996
(73) Proprietor: MAASLAND N.V., 3155 PD Maasland (NL)
(72) Inventor: Van der Lely, Olaf, CH-6312 Steinhausen (CH)
(74) Representative: Corten, Maurice Jean F.M.

(56) References cited:
- CH-A- 461 875
- DE-A- 2 237 387
- DE-B- 1 071 404
- DE-U- 9 109 601
- GB-A- 759 262
- GB-A- 2 215 971
- US-A- 5 127 217

## Description

The present invention relates to a machine for processing crop lying on the soil, preferably comprising an appended machine, such as a bale press, according to the preamble of claim 1.

Such a machine is known, e.g. from DE-A-2237387. The present invention has for its object to arrive at a machine, by means of which, in an advantageous manner, there can be obtained a large capacity. According to the invention, this is achieved by applying a construction in accordance with the characterizing feature of claim 1. In actual practice, such a construction enables to compress into bales, during each working run, e.g. three swaths at the same time. Consequently, there will be required less manoeuvring with the tractor across the field and, while moving the machine at a normal speed, there will be obtained a relatively high capacity. Furthermore, the invention has the advantage of preventing contamination of the crop, which is displaced to the centre of the machine.

For a better understanding of the invention and to show how the same may be carried into effect, reference will now be made, by way of example, to the accompanying drawings, in which:
Figure 1 shows, in plan view, a hay-making machine according to the invention, in a position in which it is connected with a tractor;
Figure 2 shows, in front view, the machine according to Figure 1, its transport position being indicated by dashed lines, and
Figure 3 shows, again in plan view, a second possible embodiment of the machine according to the invention.

In the drawings, corresponding parts are indicated by the same reference numerals. Besides, the invention is by no means restricted to the embodiments shown and described here; they only serve to illustrate the inventive idea.

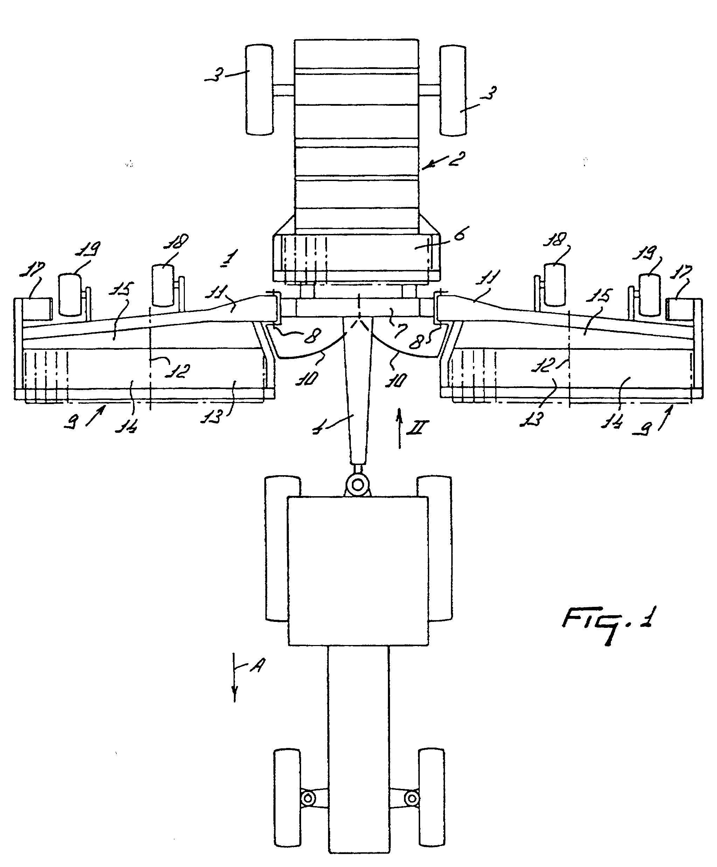

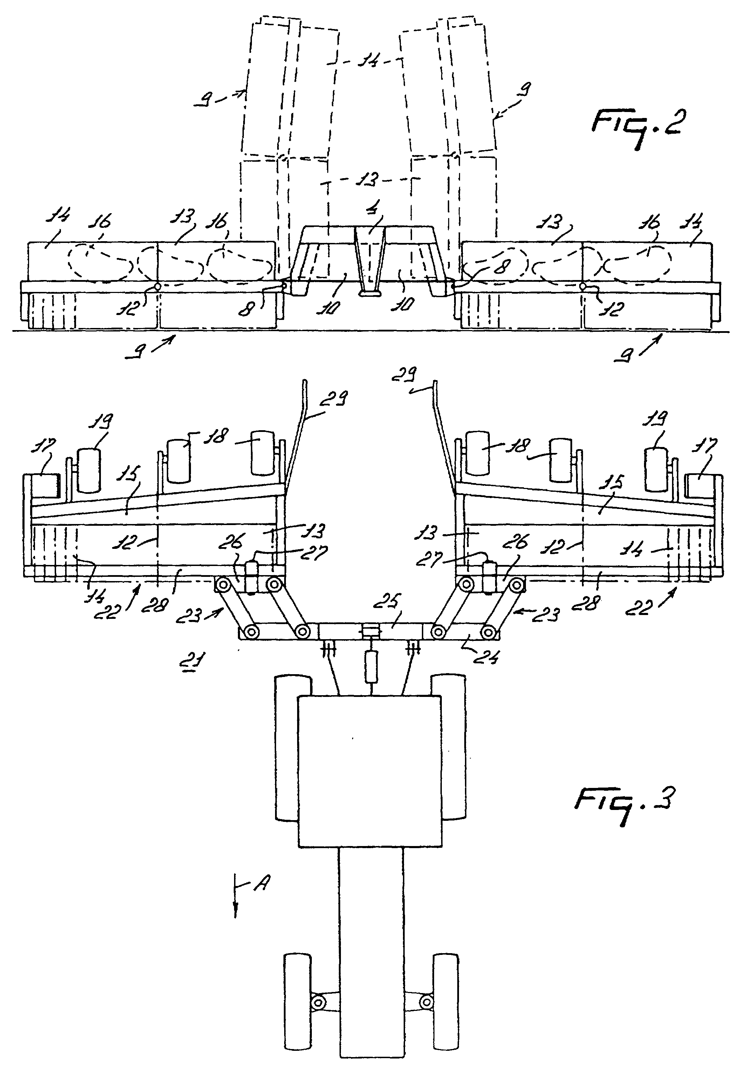

Figure 1 shows a machine 1 in accordance with the invention, which machine comprises a baler 2 for compressing hay or straw into compact bales. Instead of the baler 2, a machine such as a chopping device or a pick-up waggon may be used as well. The baler comprises wheels 3, by means of which, via the draw-beam 4, the machine 1 is moved across the field in such a way that the centre of the pick-up opening 6 and the pertinent pick-up member of the baler 2 always follow the longitudinal centre of a swath. Near its front side and near its lateral sides, the machine 1 comprises fork-shaped holders, in which an end of a frame 11 of a wing pick-up member 9 is pivotably connected about a pivot shaft 8 that is orientated in the direction of travel A. A wing pick-up member 9, extending substantially in a sideward direction from the baler 2 and transversely to the direction of travel A, serves to pick up crop lying on the soil. In the present embodiment, the fork-shaped holders are arranged at the ends of a carrier 7, extending along the front of the baler 2 and orientated transversely to the direction of travel, to which carrier the draw-beam 4 is coupled as well. The carrier 7 is connected with the front side of the baler 2.

In the present embodiment, the wing pick-up members 9 are constituted by an inner part 13 and a further part 14, having approximately the same width, which parts are pivotable relative to each other about a pivot shaft 12 orientated in the direction of travel A. Both parts 13, 14 comprise a pick-up member, which is rotatable about a rotation shaft that is orientated transversely to the direction of travel A, by means of which pick-up member the crop is picked up from the soil, is guided over the pick-up member and is deposited on a platform 15 extending substantially horizontally therebehind, above the soil. On this platform 15, one or more (non-shown) further crop displacing members are active for displacing picked-up crop, transversely to the direction of travel, to the centre of the machine 1. In the present embodiment, a crop displacing member comprises tines which are movable about an axis that is orientated substantially in the direction of travel. In this embodiment, the crop displacing members are active from a level above the platform 15 and, as is shown by dashed lines in Figure 2, their ends describe a bean-shaped orbit 16. In the lower part of the orbit 16, the movement is directed towards the centre of the machine. In accordance with the invention, the orbit 16 may extend partly below the level of the platform 15 in which, in case of such an embodiment, there are provided suitable apertures for the purpose. In the present embodiment, the crop displacing members disposed above the platform 15 are driven hydraulically by a hydraulic motor 17 which is attached near an end of a pick-up member 9.

In the present embodiment, the two parts 13, 14 of a wing pick-up member 9 are movable relative to each other to a limited extent, i.e. approximately 15° to both sides of a vertical line through the pivot shaft. Both parts 13, 14 are provided with a supporting member 18, 19, in the present embodiment constituted by a wheel. As to the inner part 13, the supporting wheel is located near the pivot shaft 12 between the two parts 13, 14, while the supporting wheel for the outer part is located approximately in the centre thereof.

As is shown in Figure 3, the invention also relates to a machine 21 for picking up crop and for subsequently displacing same, transversely to the direction of travel A, to the centre of the machine. During this operation, a possible central swath remains untouched. The wing pick-up members 22 of the present embodiment correspond substantially to those of the preceding embodiment. In the present embodiment, the inner part of a wing pick-up member 22 comprises two supporting elements 18 that are disposed near its ends. Via a parallellogram construction 23 including vertical pivot shafts, each of the two wing pick-up members 22 is connected with a beam-shaped carrier 24 extending in front of the pick-up members 22. This carrier is provided with a trestle 25 for its connection to the three-point lifting hitch of a tractor. The parallellogram construction 23 comprises two parallellograms which, near their rear ends, are interconnected via a rear carrier 26 in the form of a beam part being connected itself, via a pivot shaft 27 orientated in the direction of travel, to the frame 28 of a wing pick-up member 22. By means of a (non-shown) locking member, the parallellogram construction 23 can be fixed in a position that determines the width of the swath to be created centrally. Near their inner ends, both wing pick-up members 22 are provided with brushing members 29. For its transport, the present embodiment is adjustable, via a (non-shown) hydraulic adjusting element, about the pivot shaft 27 orientated in the direction of travel A, into a transport position corresponding at least substantially to the position indicated by dashed lines in Figure 2. By subsequently pivoting the parallellogram construction 23 inwards, there is achieved, both in the present embodiment and in the preceding one, a minimum transport width of three metres or less.

During operation of the machine in the two embodiments, crop lying on the field is either compressed or picked up by the wing pick-up members 9, 22 in swaths and displaced along the platform 15 to the centre of the machine and deposited in a swath there. In the first embodiment, the central swath is picked up immediately by the machine connected to the rear end thereof, which machine may be constituted by a bale press, a chopper device or a pick-up waggon. In the second embodiment, brushing members 29 prevent the newly created swath from disintegrating and ensure its solidity by giving it a more or less smoothly rounded-off shape. According to the invention, the first embodiment, too, can be provided with brushing members 29, which are attached to the machine at the level of a pick-up member and extend only to shortly behind the carrier 7. In this embodiment, the brushing members serve as guiding means for guiding the collected crop to the pick-up member of the rearwardly connected appended machine.

The machine according to the first embodiment, which machine could also be designated by "machine combination", has the advantage of increasing the capacity of the appended machine as well as the productivity of the person operating said machine combination, by rendering superfluous the working run wherein the crop is raked into swaths. The above-mentioned advantage of the machine combination is maintained when the crop has already been collected in swaths: e.g., instead of picking up one swath, the combination picks up three swaths at the same time, while the related reduction in driving speed is relatively small. The machine according to the second embodiment has the advantage of being capable of operating faster when no appended machine is connected thereto and, consequently, of being adapted to serve, in the same period of time, several relatively expensive appended machines.

The machine according to Figures 1 and 2, as is shown in the drawing, is provided centrally with a guide or supply member 10, which supplies the collected crop to the inlet opening 6 of a coupled appended machine. In the embodiment shown, this guide member consists of a bended plate element. This plate element has a bottom part constituting an extension of the horizontally extending platform 15 and includes, at its front side, an upright wall which, as seen in plan view, has the shape of a circle segment. The part of this circle segment being adjacent to the platform 15 has a width which equals at least that of the platform 15 but, preferably, exceeds same. Near the centre of the machine, the circle segment merges into a vertical wall orientated in the direction of travel A. In a further embodiment, the guide member is constituted by an endless element, such as a rubber belt, driven by an hydraulic motor and rotating about shafts that are orientated transversely to the direction of travel A, which element rotates at its upper side in a rearward direction. In both embodiments, once picked-up crop is directly supplied to the inlet opening 6 of the appended machine, which has the advantage that the pick-up member of the appended machine is not charged excessively, so that the crop can be processed quickly, regularly and free of interference. An additional important advantage is that the once picked-up crop does no longer touch the soil, so that the risk of contamination by soil particles is limited.

## Claims

1. A machine (1, 21) for processing crop lying on the soil, the machine (1, 21) including at least one pick-up member (9, 22), for transversely displacing crop, which extends substantially transversely to the direction of travel A and is pivotably connected about a shaft (8, 27) orientated in the direction of travel A, **characterized in that** the pick-up member (9, 22) is adapted to be displaced transversely to the direction of travel A.

2. A machine (1, 21) as claimed in claim 1, **characterized in that**, for the displacement transversely to the direction of travel, the machine (1, 21) comprises a parallelogram construction (23) which is pivotable about substantially vertical shafts.

3. A machine (1, 21) as claimed in claim 1 or 2, **characterized in that,** the machine (1, 21) comprises an appended machine, such as a bale press (2).

4. A machine (1, 21) as claimed in claim 3, **characterized in that,** for its connection to a tractor or the like, the machine (1, 21) includes a draw-beam (4) which extends forwardly in such a way that, between the tractor and the appended machine, such as a bale press (2), there can be provided a pick-up member (9, 22).

5. A machine (1, 21) as claimed in claim 3 or 4, **characterized in that** the machine comprises one or more crop pick-up members (9, 22) for depositing picked-up crop on a platform (15) along which, by means of displacing members, the collected crop is guided, transversely, to the centre of the machine (1, 21), in particular to the inlet opening of the appended machine, such as a bale press.

6. A machine (1, 21) as claimed in claim 3, 4 or 5, **characterized in that** the appended machine, such as a bale press (2), at each of its lateral sides, is provided with a member (9, 22) for picking up crop and displacing same in a lateral direction, which members each have a working width of three metres.

7. A machine (1, 21) as claimed in claim 6, **characterized in that** each of the two parts (13, 14) has a working width of 1.5 metres.

8. A machine (1, 21) as claimed in any one of the preceding claims 3 to 7, **characterized in that**, near its centre, the machine (1, 21) comprises a supply member (10) for guiding picked-up crop rearwardly to the inlet opening (6) of an appended machine.

9. A machine (1, 21) as claimed in claim 8, **characterized in that** the guide member comprises a plate-shaped guide means including, near its front side, an upright wall.

10. A machine (1, 21) as claimed in claim 8, **characterized in that** the upright wall, as seen in plan view, has substantially the shape of a circle segment.

11. A machine (1, 21) as claimed in claim 8, **characterized in that** the supply member is constituted by an endless element, such as a belt, driven about shafts that are orientated transversely to the direction of travel.

12. A machine (1, 21) as claimed in any one of the preceding claims, **characterized in that** the pick-up member (9, 22) is movable into a substantially vertical position.

13. A machine (1, 21) as claimed in any one of the preceding claims, **characterized in that** each part (13, 14) of a pick-up member (9, 22) includes a supporting member (18, 19).

14. A machine (1, 21) as claimed in claim 13, **characterized in that** the supporting member (18, 19) is provided at the rear end of the pick-up member (9, 22).

15. A machine (1, 21) as claimed in any one of the preceding claims, **characterized in that** the crop is displaced transversely by means of displacing members, which are driven about a shaft orientated in the direction of travel A and whose ends describe a bean-shaped orbit (16).

16. A machine (1, 21) as claimed in claim 5 and 15, **characterized in that** at least the ends of the displacing members move, during part of the bean-shaped orbit (16), through an aperture in the platform (15).

17. A machine (1, 21) as claimed in claim 15 or 16, **characterized in that** the displacing members of the pick-up member (9, 22) are capable of being driven hydraulically by means of a hydraulic motor (17).

18. A machine (1, 21) as claimed in any one of the preceding claims, **characterized in that** said pick-up member (9, 22) comprises at least two parts (13, 14) that are pivotable relative to each other about a pivot shaft (12) orientated in the direction of travel A.

19. A machine (1, 21) as claimed in any one of the preceding claims, **characterized in that** the total working width of the machine (1, 21) can amount to eight metres.

20. A machine (1, 21) as claimed in any one of the preceding claims, **characterized in that** the machine (1, 21) comprises per member (9, 22) at least three supporting wheels (18, 19).

21. A machine (1, 21) as claimed in any one of the preceding claims, **characterized in that** the machine (1, 21) is capable of being connected to the three-point lifting hitch of a tractor.

22. A machine (1, 21) as claimed in any one of the preceding claims, **characterized in that** a pick-up member (9, 22) comprises a pick-up provided with post-controlled tines.

## Patentansprüche

1. Maschine (1, 21) zum Bearbeiten von am Boden liegendem Erntegut, wobei die Maschine (1, 21) zur Verlagerung von Erntegut in Querrichtung mindestens ein Aufnahmeglied (9, 22) aufweist, das sich im wesentlichen quer zur Arbeitsrichtung A erstreckt und um eine sich in Arbeitsrichtung A erstreckende Achse (8, 27) schwenkbar ist,
**dadurch gekennzeichnet, daß** das Aufnahmeglied (9, 22) dazu ausgebildet ist, quer zur Arbeitsrichtung A verlagert zu werden.

2. Maschine (1, 21) nach Anspruch 1,
**dadurch gekennzeichnet, daß** die Maschine (1, 21) zur Verlagerung quer zur Arbeitsrichtung eine Parallelogrammführung (23) aufweist, die um im wesentlichen vertikale Achsen schwenkbar ist.

3. Maschine (1, 21) nach Anspruch 1 oder 2,
**dadurch gekennzeichnet, daß** die Maschine (1, 21) eine angehängte Maschine, wie z. B. eine Ballenpresse (2), umfaßt.

4. Maschine (1, 21) nach Anspruch 3,
**dadurch gekennzeichnet, daß** die Maschine (1, 21) zum Anschluß an einen Schlepper oder dergleichen eine Zugstange (4) aufweist, die sich in der Weise nach vorn erstreckt, daß zwischen dem Schlepper und der angehängten Maschine, wie z. B. einer Ballenpresse (2), ein Aufnahmeglied (9, 22) angeordnet werden kann.

5. Maschine (1, 21) nach Anspruch 3 oder 4,
**dadurch gekennzeichnet, daß** die Maschine ein oder mehrere Gutaufnahmeglieder (9, 22) umfaßt, um aufgenommenes Erntegut auf einer Plattform (15) abzulegen, entlang der das aufgenommene Erntegut mit Hilfe von Verlagerungsgliedern in Querrichtung zur Mitte der Maschine (1, 21), insbesondere zur Eintrittsöffnung der angehängten Maschine, wie z. B. einer Ballenpresse, geleitet wird.

6. Maschine (1, 21) nach Anspruch 3, 4 oder 5,
**dadurch gekennzeichnet, daß** die angehängte Maschine, wie z. B. eine Ballenpresse (2), auf jeder ihrer Seiten mit einem Glied (9, 22) zum Aufnehmen von Erntegut und Verlagern desselben in seitlicher Richtung versehen ist, wobei die Glieder jeweils eine Arbeitsbreite von drei Metern haben.

7. Maschine (1, 21) nach Anspruch 6,
**dadurch gekennzeichnet, daß** jeder der beiden Teile (13, 14) eine Arbeitsbreite von 1,5 Metern hat.

8. Maschine (1, 21) nach einem der vorhergehenden Ansprüche 3 bis 7,
**dadurch gekennzeichnet, daß** die Maschine (1, 21) nahe ihrer Mitte eine Zuführvorrichtung (10) aufweist, um aufgenommenes Erntegut nach hinten zur Eintrittsöffnung (6) einer angehängten Maschine zu leiten.

9. Maschine (1, 21) nach Anspruch 8,
**dadurch gekennzeichnet, daß** das Führungsglied eine plattenförmige Führungsvorrichtung umfaßt, die nahe ihrer Vorderseite eine aufrechte Wandung aufweist.

10. Maschine (1, 21) nach Anspruch 8,
**dadurch gekennzeichnet, daß** die aufrechte Wandung in Draufsicht im wesentlichen die Form eines Kreissegments hat.

11. Maschine (1, 21) nach Anspruch 8,
**dadurch gekennzeichnet, daß** die Zuführvorrichtung durch ein Endloselement, wie z. B. ein Band, gebildet ist, das um quer zur Arbeitsrichtung ausgerichtete Achsen angetrieben wird.

12. Maschine (1, 21) nach einem der vorhergehenden Ansprüche,
**dadurch gekennzeichnet, daß** das Aufnahmeglied (9, 22) in eine im wesentlichen vertikale Position bewegbar ist.

13. Maschine (1, 21) nach einem der vorhergehenden Ansprüche,
**dadurch gekennzeichnet, daß** jeder Teil (13, 14) eines Aufnahmegliedes (9, 22) ein Stützglied (18, 19) aufweist.

14. Maschine (1, 21) nach Anspruch 13,
**dadurch gekennzeichnet, daß** das Stützglied (18, 19) am hinteren Ende des Aufnahmegliedes (9, 22) angeordnet ist.

15. Maschine (1, 21) nach einem der vorhergehenden Ansprüche,
**dadurch gekennzeichnet, daß** das Erntegut in Querrichtung mit Hilfe von Verlagerungsgliedern verlagert wird, die um eine in Arbeitsrichtung A ausgerichtete Achse angetrieben werden, und deren Enden eine bohnenförmige Bahn (16) beschreiben.

16. Maschine (1, 21) nach Anspruch 5 und 15,
**dadurch gekennzeichnet, daß** sich zumindest die Enden der Verlagerungsglieder während eines Teiles der bohnenförmigen Bahn (16) durch eine Öffnung in der Plattform (15) bewegen.

17. Maschine (1, 21) nach Anspruch 15 oder 16,
**dadurch gekennzeichnet, daß** die Verlagerungsglieder des Aufnahmegliedes (9, 22) mittels eines Hydraulikmotors (17) hydraulisch angetrieben werden können.

18. Maschine (1, 21) nach einem der vorhergehenden Ansprüche,
**dadurch gekennzeichnet, daß** das Aufnahmeglied (9, 22) mindestens zwei Teile (13, 14) umfaßt, die relativ zueinander um eine sich in Arbeitsrichtung A erstreckende Schwenkachse (12) schwenkbar sind.

19. Maschine (1, 21) nach einem der vorhergehenden Ansprüche,
**dadurch gekennzeichnet, daß** die Gesamtarbeitsbreite der Maschine (1, 21) acht Meter betragen kann.

20. Maschine (1, 21) nach einem der vorhergehenden Ansprüche,
**dadurch gekennzeichnet, daß** die Maschine (1, 21) pro Glied (9, 22) mindestens drei Stützräder (18, 19) aufweist.

21. Maschine (1, 21) nach einem der vorhergehenden Ansprüche,
**dadurch gekennzeichnet, daß** die Maschine (1, 21) an die Dreipunkt-Hebevorrichtung eines Schleppers anschließbar ist.

22. Maschine (1, 21) nach einem der vorhergehenden Ansprüche,
**dadurch gekennzeichnet, daß** ein Aufnahmeglied (9, 22) einen Aufnehmer umfaßt, der mit nachgeführten Zinken versehen ist.

## Revendications

1. Machine (1, 21) pour traiter une récolte étendue sur le sol, la machine (1, 21) comportant au moins un élément de ramassage (9, 22) destiné à déplacer transversalement la récolte, qui s'étend sensiblement transversalement par rapport à la direction de déplacement A, et qui est connecté de manière pivotante autour d'un arbre (8, 27) orienté dans la direction de déplacement A, **caractérisée en ce que** l'élément de ramassage (9, 22) est adapté pour être déplacé transversalement par rapport à la direction de déplacement A.

2. Machine (1, 21) selon la revendication 1, **caractérisée en ce que**, pour le déplacement transversalement par rapport à la direction de déplacement, la machine (1, 21) comporte une structure en parallélogramme (23) qui peut pivoter autour d'arbres sensiblement verticaux.

3. Machine (1, 21) selon la revendication 1 ou 2, **caractérisée en ce que** la machine (1, 21) comporte une machine annexée, telle qu'une presse à mettre en botte (2).

4. Machine (1, 21) selon la revendication 3, **caractérisée en ce que**, pour être connectée à un tracteur ou analogue, la machine (1, 21) comporte une poutre de traction (4) qui s'étend vers l'avant d'une manière telle que, entre le tracteur et la machine annexée, telle qu'une presse à mettre en botte (2), on peut agencer un élément de ramassage (9, 22).

5. Machine (1, 21) selon la revendication 3 ou 4, **caractérisée en ce que** la machine comporte un ou plusieurs éléments de ramassage de récolte (9, 22) destinés à déposer une récolte ramassée sur une plate-forme (15) le long de laquelle, par l'intermédiaire d'éléments de déplacement, la récolte est guidée, transversalement, vers le centre de la machine (1, 21), en particulier vers l'ouverture d'entrée de la machine annexée, telle qu'une presse à mettre en botte.

6. Machine (1, 21) selon la revendication 3, 4 ou 5, **caractérisée en ce que** la machine annexée, telle qu'une presse à mettre en botte (2), au niveau de chacun de ses côtés latéraux, est munie d'un élément (9, 22) destiné à ramasser une récolte et à la déplacer dans une direction latérale, éléments qui ont chacun une largeur active de trois mètres.

7. Machine (1, 21) selon la revendication 6, **caractérisée en ce que** chacune des deux parties (13, 14) a une largeur active de 1,5 mètres.

8. Machine (1, 21) selon l'une quelconque des revendications 3 à 7, **caractérisée en ce que**, à proximité de son centre, la machine (1, 21) comporte un élément d'alimentation (10) destiné à guider une récolte récupérée vers l'arrière en direction de l'ouverture d'entrée (6) d'une machine annexée.

9. Machine (1, 21) selon la revendication 8, **caractérisée en ce que** l'élément de guidage comporte des moyens de guidage en forme de plaque comportant, à proximité de leur côté avant, une paroi dirigée vers le haut.

10. Machine (1, 21) selon la revendication 8, **caractérisée en ce que** la paroi dirigée vers le haut, vue de dessus, à sensiblement la forme d'un segment de cercle.

11. Machine (1, 21) selon la revendication 8, **caractérisée en ce que** l'élément d'alimentation est constitué d'un élément sans fin, tel qu'une courroie, entraîné autour d'arbres qui sont orientés transversalement par rapport à la direction de déplacement.

12. Machine (1, 21) selon l'une quelconque des revendications précédentes, **caractérisée en ce que** l'élément de ramassage (9, 22) est mobile dans une position sensiblement verticale.

13. Machine (1, 21) selon l'une quelconque des revendications précédentes, **caractérisée en ce que** chaque partie (13, 14) de l'élément de ramassage (9, 22) comporte un élément de support (18, 19).

14. Machine (1, 21) selon la revendication 13, **caractérisée en ce que** l'élément de support (18, 19) est agencé au niveau de l'extrémité arrière de l'élément de ramassage (9, 22).

15. Machine (1, 21) selon l'une quelconque des revendications précédentes, **caractérisée en ce que** la récolte est déplacée transversalement par l'intermédiaire d'éléments de déplacement, qui sont entraînés autour d'un arbre orienté dans la direction de déplacement A, et dont les extrémités décrivent une orbite en forme de haricot (16).

16. Machine (1, 21) selon les revendications 5 et 15, **caractérisée en ce qu'**au moins les extrémités des éléments de déplacement se déplacent, pendant une partie de l'orbite en forme de haricot (16), à travers une ouverture située dans la plate-forme (15).

17. Machine (1, 21) selon la revendication 15 ou 16, **caractérisée en ce que** les éléments de déplacement de l'élément de ramassage (9, 22) peuvent être entraînés de manière hydraulique par l'intermédiaire d'un moteur hydraulique (17).

18. Machine (1, 21) selon l'une quelconque des revendications précédentes, **caractérisée en ce que** ledit élément de ramassage (9, 22) comporte au moins deux parties (13, 14) qui peuvent pivoter l'une par rapport à l'autre autour d'un arbre de pivotement (12) orienté dans la direction de déplacement A.

19. Machine (1, 21) selon l'une quelconque des revendications précédentes, **caractérisée en ce que** la largeur active totale de la machine (1, 21) peut s'élever à huit mètres.

20. Machine (1, 21) selon l'une quelconque des revendications précédentes, **caractérisée en ce que** la machine (1, 21) comporte au moins trois roues de support (18, 19) par élément (9, 22).

21. Machine (1, 21) selon l'une quelconque des revendications précédentes, **caractérisée en ce que** la machine (1, 21) peut être connectée au crochet de levage à trois points d'un tracteur.

22. Machine (1, 21) selon l'une quelconque des revendications précédentes, **caractérisée en ce qu'**un élément de ramassage (9, 22) comporte un ramasseur muni de dents post-commandées.
